# EUROPÄISCHE PATENTSCHRIFT

(11) **EP 1 294 262 B1**
(45) Veröffentlichungstag und Bekanntmachung des Hinweises auf die Patenterteilung: **03.12.2003**
(21) Anmeldenummer: 01943434.9
(22) Anmeldetag: 23.05.2001
(51) Int. Cl.: A47J 43/07, A47J 43/044

(54) **ARBEITSBEHÄLTER ZUM AUFNEHMEN UND BEARBEITEN VON NAHRUNGSMITTELN**
WORKING CONTAINER FOR RECEIVING AND PROCESSING FOODSTUFFS
RECIPIENT DE TRAVAIL POUR RECEVOIR ET TRANSFORMER DES PRODUITS ALIMENTAIRES

(30) Priorität: 29.06.2000 DE 10031753
(43) Veröffentlichungstag der Anmeldung: 26.03.2003
(73) Patentinhaber: Braun GmbH, 61476 Kronberg (DE)
(72) Erfinder: SAFONT, Vicenc, E-08039 Montgat (ES); ROMAN, José Luis, E-08960 Sant Just Desvern (ES); REBORDOSA, Antonio, E-08272 Sant Fruitos de Bages (ES); PENARANDA, Mariano, E-08005 Barcelona (ES)
(86) Internationale Anmeldenummer: EP0105905
(87) Internationale Veröffentlichungsnummer: WO02000078

(56) Entgegenhaltungen:
- DE-A- 4 128 456
- US-A- 6 000 650

## Beschreibung

Die Erfindung betrifft einen Arbeitsbehälter zum Aufnehmen und Bearbeiten von Nahrungsmitteln gemäß dem Oberbegriff des Patentanspruchs 1. Ein solcher Arbeitsbehälter ist in US-A-6000650 offenbart.

Derartige Arbeitsbehälter sind beispielsweise bereits aus der DE 41 28 456 A1 bekannt. Dieser Arbeitsbehälter weist einen sich vom Boden in den Innenraum hineinerstreckenden Zapfen auf, auf dem ein Arbeitswerkzeug drehbar gelagert ist. Das Arbeitswerkzeug weist an seinem dem Zapfen gegenüberliegenden Ende einen Eingriff auf, der nach Verschließen des Arbeitsbehälters mit einem am Deckel korrespondierenden Eingriff in eine drehfeste Verbindung gelangt. Der korrespondierende Eingriff ist mit einer Antriebswelle verbunden, die aus dem Deckel nach oben herausragt und die mit einem Antriebsteil, vorzugsweise einem Handrührer, Stabmixer oder sonst einem Gerät verbindbar ist. Auf diese Weise kann nach Einschalten des Antriebsteils das im Arbeitsbehälter auf dem Zapfen drehbar gelagerte Arbeitswerkzeug in Drehung versetzt werden. Da am Arbeitswerkzeug Schneideinrichtungen oder sonstige die Nahrungsmittel behandelnde Einrichtungen ausgebildet sind, werden die Nahrungsmittel auf diese Weise verührt und zerkleinert. Nach Zerkleinerung der Nahrungsmtitel können diese im Arbeitsbehälter nach Entnahme des Arbeitswerkzeuges verbleiben oder auch zur weiteren Verarbeitung oder zum Verzehr entnommen werden.

Aufgabe der Erfindung ist es nun, ein Arbeitsbehälter zum Aufnehmen und Bearbeiten von Nahrungsmitteln gemäß dem Oberbegriff des Patentanspruchs 1 derart zu verbessern, daß einerseits mit einem auf dem Zapfen gelagerten Arbeitswerkzeug Nahrungsmittel bearbeitet werden können und andererseits auch nach Entnahme des Arbeitswerkzeugs aus dem Arbeitsbehälter mit einem an einem Gerät ausgebildeten Arbeitswerkzeug ebenfalls im Arbeitsbehälter befindliche Nahrungsmittel zerkleinert werden können, ohne daß der Zapfen dabei dem Arbeitswerkzeug hinderlich im Wege steht.

Diese Aufgabe wird erfindungsgemäß durch die kennzeichnenden Merkmale des Patentanspruchs 1 gelöst. Dadurch, daß der Zapfen im Boden des Arbeitsbehälters versenkt bzw. eingelassen ist, kann nach Entnahme des im Arbeitsbehälter auf dem Zapfen gelagerten Arbeitswerkzeug beispielsweise das Arbeitswerkzeug eines Stabmixers oder Handrührers so weit in den Arbeitsbehälter eingetaucht werden, bis dieses den Boden des Arbeitsbehälters berührt. Nun kann das Gerät eingeschaltet werden und die im Arbeitsbehälter befindlichen Nahrungsmittel werden durch das Arbeitswerkzeug des Stabmixers oder Handrührers zerkleinert und/oder durchgemischt. Nach der Erfindung ist es also möglich, nicht nur mit dem im Arbeitsbehälter im normalen Fall auf dem Zapfen gelagerten Arbeitswerkzeug Nahrungsmittel zu bearbeiten, sondern es kann auch ein externes Zerkleinerungsgerät mit seinem Arbeitswerkzeug in den Arbeitsbehällter eingetaucht und die Nahrungsmittel zerkleinert werden.

Durch die Erfindung wird die Verwendbarkeit des Arbeitsbehälters erweitert, d.h., mit dem Arbeitsbehälter können beispielsweise Kräuter, wie Petersilie, Dill, oder sonstiges Gemüse, wie Zwiebeln, Karotten etc., mit dem auf dem Zapfen gelagerten Messer zerkleinert werden. Ebenso können nach Herausnahme des Arbeitswerkzeugs in diesem Arbeitsbehälter Nahrungsmittel mittels eines Stabmixers püriert und zerkleinert werden. Es ist aber auch möglich, in dem Arbeitsbehälter mit Sahnebesen Sahne steif zu schlagen, ohne daß der am Gerät ausgebildete Sahnebesen hinderlich in den Zapfen eingreifen könnte. Durch die Erfindung wird eine Zerstörung des Arbeitsbehälters bzw. des Arbeitswerkzeugs des Geräts vermieden. Dadurch sind Verletzungen einer Bedienungsperson ausgeschlossen.

Durch die Merkmale des Patentanspruchs 2 kann ein Arbeitswerkzeug eines Haushaltsgeräts nicht den Zapfen berühren, wenn sowohl die Tiefe wie die radiale Breite (Durchmesser) der Vertiefung am Übergang zum Randbereich des Behälterbodens in Abhängigkeit der Länge des Zapfens so eng bemessen sind, daß das Arbeitswerkzeug nicht in die Vertiefung bzw. Ausnehmung hineingreifen kann, sondern immer vom Bodenbereich außerhalb der Vertiefung auf Abstand von dem Zapfen gehalten wird.

Durch die Merkmale des Patentanspruchs 3 werden besondere Dichtelemente nicht benötigt, da die Vertiefung von einer Sacklochbohrung gebildet wird. Der Zapfen ist dabei drehfest, beispielsweise durch Verkleben, Verpressen, Verschrauben oder sonstwie in der Sacklochbohrung befestigt.

Durch die Merkmale des Patentanspruchs 4 ist der Zapfen mittels einer Hülse in der Sacklochbohrung eingepreßt. Dies hat den Vorteil, daß die Preßkräfte nicht direkt auf den Werkstoff des Arbeitsbehälters sondern über eine Hülse, deren Werkstoff höhere Festigkeit als der Werkstoff des Arbeitsbehälters aufweist, übertragen. Die Hülse selbst kann dann eingeklebt oder mit geringerer Pressung in der Vertiefung des Bodens des Arbeitsbehälters befestigt sein.

An dieser Stelle sei noch erwähnt, daß es selbstverständlich auch denkbar wäre, den Zapfen lösbar am Boden des Arbeitsbehälters zu befestigen, dies hat aber den Nachteil, daß, wenn man den Zapfen vergessen hat herauszunehmen, es dann zu Beschädigungen des Arbeitswerkzeugs eines Stabmixers oder des Handmixers führen kann. Aus diesem Grunde ist diese Lösung nicht besonders sinnvoll.

Die Merkmale des Patentanspruchs 5 ermöglichen einen kippfreien Stand des Arbeitsbehälters auf einer Abstellfläche.

Ein Ausführungsbeispiel der Erfindung ist in der Zeichnung dargestellt und wird im folgenden näher erläutert. Es zeigen:
- Fig. 1: einen Längsschnitt durch einen Arbeitsbehälter mit Deckel und im Raum des Arbeitsbehälters auf dem Zapfen zentrierten Arbeitswerkzeug,
- Fig. 2: einen Arbeitsbehälter ohne Deckel und Arbeitswerkzeug,
- Fig. 3: einen vergrößerten Ausschnitt Z gemäß Fig. 2 und
- Fig. 4: einen Arbeitsbehälter mit abgenommenem Deckel und demontiertem Arbeitswerkzeug, allerdings mit einem eingesetzten Rührstab eines Stabmixers.

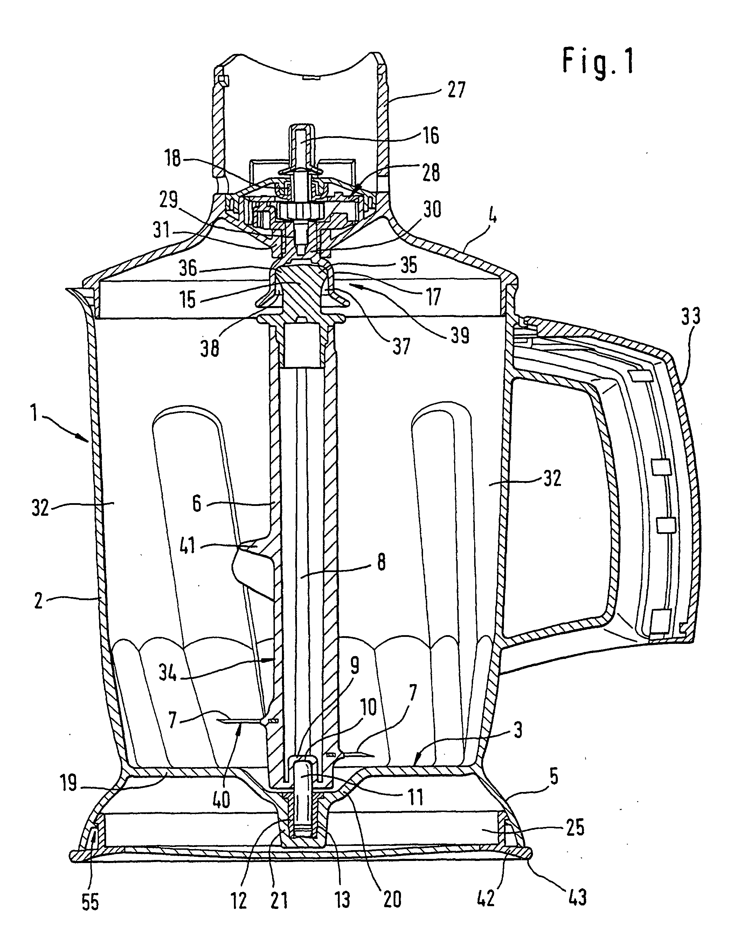

Figur 1 zeigt einen im wesentlichen zylinderförmigen Arbeitsbehälter 1, der eine Behälterwand 2, einen an der Behälterwand 2 seitlich angeformten Handgriff 33 und einen Behälterboden 3 aufweist. Der Bearbeitungsbehälter 1 steht auf einem Behälterfuß 5 auf. Behälterfuß 5, Behälterboden 3, Behälterwand 2 und Handgriff 33 bestehen aus einem einzigen Kunststofformteil.

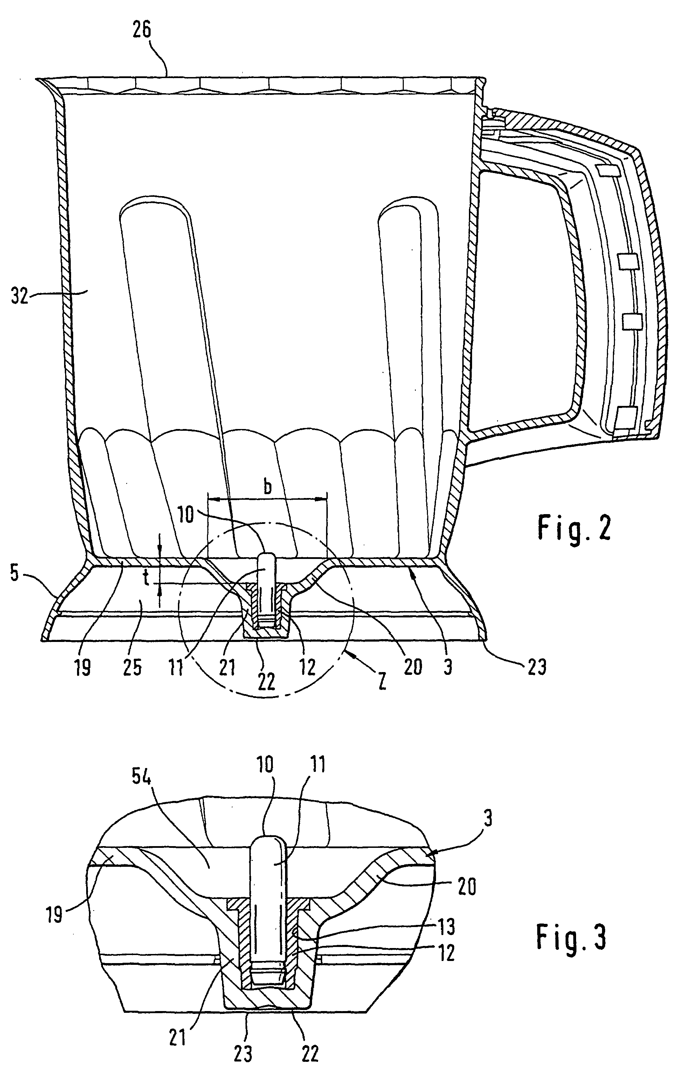

Der Bearbeitungsbehälter 1 ist im betriebsbereiten Zustand an seinem oberen offenen Ende 26 (Fig. 2) durch einen Behälterdeckel 4 (Fig. 1) verschließbar. Der Behälterdeckel 4 ist dabei leicht kegelförmig ausgebildet und weist in seinem Zentrum einen zylinderförmigen Fortsatz 27 auf. In diesem Fortsatz 27 ist eine Antriebswelle 16 mit Getriebeeinheit 28 aufgenommen. Die Antriebswelle 16 ist über eine Lagerung 18 am Fortsatz 27 und über eine in einer Abtriebswelle 30 ausgebildeten Bohrung 29 drehbar gelagert. Die Abtriebswelle 30 ist wieder über das Lager 31, das Teil des Behälterdeckels 4 ist, gelagert. Die Abtriebswelle 30 setzt sich in den Aufnahmeraum 32 des Bearbeitungsbehälters 1 fort und weist an ihrem freien Ende eine Kupplungsaufnahme 17 auf.

Konzentrisch zur Abtriebswelle 30 ist nach Fig. 1 im Behälterboden 3 ein Lagerzapfen 11 mit einem abgerundeten Kopf 10 vorgesehen. Der Lagerzapfen 11 ist dabei von einer Lagerzapfenbuchse 12 aufgenommen, die wiederum in einer als Sacklochbohrung ausgebildeten Buchsenaufnahme 13, die in den Behälterboden 3 geformt ist, gehalten wird. Zwischen der nach unten glockenförmig ausgebildeten Kupplungsaufnahme 17 und dem Lagerzapfen 11 ist ein mit einer Werkzeugwelle 6 versehenes Arbeitswerkzeug 34 aufgenommen, das an seinem oberen Ende eine als Eingriff ausgebildete Kupplung 15 aufweist, die mit ihren kreuzförmig angeordneten Stegen 35, 36 in entsprechende Eingriffe 37, 38 der Kupplungsaufnahme 17 drehfest, aber lösbar eingreift. Dabei bilden die abgerundeten Außenkanten der Kreuzverzahnung 35, 36, 37, 38 mit entsprechenden Wandungen der Kupplungsaufnahme 17 Berührungspunkte, die als obere Lagerung 39 des Arbeitswerkzeugs 34 wirken.

Am unteren Ende der Werkzeugwelle 6 ist nach Fig. 1 ein Bearbeitungswerkzeug 40 in Form von sichelartigen Messern eingespritzt, die in verschiedenen Ebenen aus der Werkzeugwelle 6 in den Aufnahmeraum 32 eindringen. Oberhalb der Messer 7 ist an der Werkzeugwelle 6 ein Rührelement 41 angeformt. Die Werkzeugwelle 6 ist als Hohlwelle mit innen entlang der Längsachse angeordneten Versteifungsrippen 8 ausgebildet und ist im vorliegenden Fall aus einem geeigneten thermoplastischen Kunststoff hergestellt. An ihrem unteren Ende ist die Werkzeugwelle 6 durch eine in Fig. 1 gezeigte Gelenkpfanne 9 abgeschlossen, über die sie auf dem Kopf 10 des Lagerzapfens 11 dreh- und kippbeweglich gelagert ist.

In den Figuren 1 bis 4 besteht der Behälterboden aus einem ringförmig und horizontal verlaufenden äußeren Abschnitt 19 und einer konzentrisch zur Behälterwandung 2 mittig verlaufenden Vertiefung 20, an die sich ein topfförmiger zentraler Endabschnitt 21 nach unten anschließt. Die Vertiefung weist die radiale Breite b und die Tiefe t auf. In dem Endabschnitt 21 ist die Sacklochbohrung 13 ausgebildet, in der die Lagerzapfenbuchse 12 befestigt ist. Der topfförmige Endabschnitt 21 endet außen mit einer Stirnfläche 22, die den Rand 23 des Behälterfußes 5 nach unten nicht überschreitet, wie dies die Figuren 2, 3 und 4 zeigen. Hierdurch liegt der Rand 23 immer gleichmäßig auf einer Abstellfläche 24 an, so daß der Arbeitsbehälter 1 nicht wackelt.

Ist allerdings die Ausnehmung 25 des Behälterfußes 5 nach Fig. 1 durch eine Bodenabdekkung 42 verschlossen, so bildet die unterste Linie bzw. der unterste Aufstellbereich 43 den Kontakt mit der Abstellfläche 24. Die Bodenabdeckung 42 ist über Rastelemente 55 mit dem Behälterfuß 5 fest verbunden.

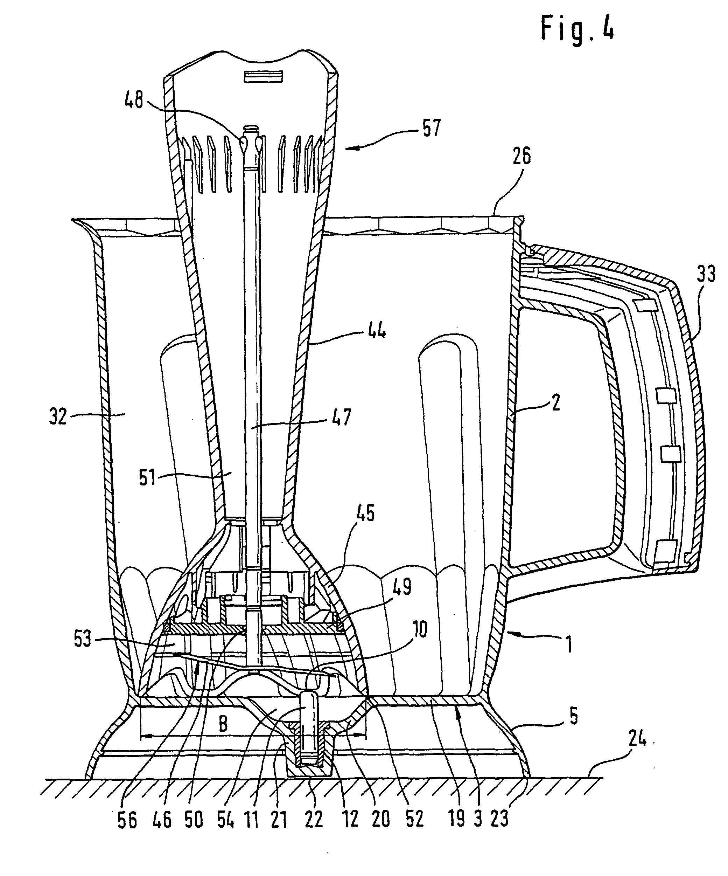

In Fig. 4 ist wiederum der Arbeitsbehälter 1 zu erkennen, so wie er auch in Fig. 2 dargestellt ist, wobei auch hier das Arbeitswerkzeug 34 (Fig. 1) aus dem Arbeitsbehälter 1 entnommen wurde. Auch der Behälterdeckel 4, so wie er in Fig. 1 dargestellt ist, ist hier entfernt. In das offene Ende 26 des Arbeitsbehälters 1 greift der Schaft 44 eines elektrisch betriebenen Stabmixers 57 ein, wobei der Einfachheit halber in dieser Darstellung das Antriebselement des Stabmixers, also das Motorgehäuse am oberen Ende des Schaftes 44 nicht dargestellt, also vom Schaft 44 getrennt ist. An den Schaft 44 schließt sich nach unten eine zum Boden 3 hin offene Glocke 45 an, in der ein mit Messern 46 ausgebildetes Arbeitswerkzeug 56 des Stabmixers 57 drehbar gelagert ist. Das Arbeitswerkzeug 56 ist mit einer zentral im Schaft 44 verlaufenden Antriebswelle 47 drehfest verbunden, die über Mitnehmereinrichtungen 48 mit der Motorwelle (nicht dargestellt) des Stabmixers 57 verbindbar ist. Die Antriebswelle 47 durchdringt einen in der Glocke 45 befestigten Deckel 49 über eine Bohrung 50 dichtend. Hierdurch können Nahrungsmittel nicht in den Innenraum 51 des Schaftes 44 gelangen.

Wie aus Fig. 4 weiterhin ersichtlich ist, verläuft das Arbeitswerkzeug 56 des Stabmixers 57 im Abstand zum freien Ende 52 der Glocke 45, damit dieses nicht an dem in der Vertiefung 20 ausgebildeten Lagerzapfen 11 anschlagen kann. Zwar ragt das freie Ende des Kopfes 10 des Lagerzapfens 11 geringfügig in den Bearbeitungsraum 53 der Glocke 45 hinein, der Abstand zum Arbeitswerkzeug 56 ist aber immer noch so groß, daß es nicht zur Berührung kommen kann. Das freie Ende 52 der Glocke 45 stützt sich am äußeren Abschnitt 19 des Behälterbodens 3 ab, so daß das Arbeitswerkzeug 46 sich niemals weiter dem freien Ende 10 des Zapfens 11 nähern kann. Auch ein Eingreifen des freien Endes 52 der Glocke 45 in den von der Vertiefung 20 gebildeten Raum 54 ist nicht möglich, da der lichte Durchmesser der Vertiefung 20 bzw. die radiale Breite b erheblich kleiner ist als der lichte Durchmesser B der Glocke 45 im Bereich des freien Endes 52.

Die Wirkungsweise des Arbeitsbehälters ist folgende:

Nachdem das Arbeitswerkzeug 34 auf dem Lagerzapfen 11 nach Fig. 1 zentriert wurde, wird nun der Behälterdeckel 4 auf dem offenen Ende 26 des Arbeitsbehälters 1 aufgesetzt. Dabei zentriert sich die am oberen Ende des Arbeitswerkzeugs 34 ausgebildete Kupplung 15 an der Kupplungsaufnahme 17, so daß nun das Arbeitswerkzeug 34 im wesentlichen in Längsrichtung der Mittelachse des Arbeitsbehälters 1 verläuft. Nun wird auf den Fortsatz 27 eine in der Zeichnung nicht dargestellte Antriebseinheit aufgesetzt, die mit der Antriebswelle 16 drehfest in Eingriff gelangt.

Nach Einschalten der elektrischen Antriebseinheit wird über die Antriebswelle 16, die Getriebeeinheit 28 die Abtriebswelle 30 angetrieben, die wiederum das Arbeitswerkzeug 34 in Drehung versetzt. Im Arbeitsbehälter 1 befindliche Nahrungsmittel werden durch die Messer 7 des Bearbeitungswerkzeugs 34 zerkleinert und zusätzlich durch die Rührelemente 41 mit den restlichen Nahrungsmitteln vermischt. Nach Beendigung des Bearbeitungsvorgangs der Nahrungsmittel kann wiederum der Behälterdeckel 4 vom Arbeitsbehälter 1 entnommen und das Arbeitswerkzeug 34 herausgenommen werden. Nun sind die Nahrungsmittel frei zugänglich und können entweder aus dem Arbeitsbehälter 1 herausgeschüttet oder sonst wie mit Hilfswerkzeugen herausgelöffelt werden.

Will man nun beispielsweise Nahrungsmittel pürieren oder Sahne schlagen, so kann man, wie dies in Fig. 4 dargestellt ist, den Bearbeitungsteil eines Haushaltsküchengeräts in den Aufnahmeraum 32 des Arbeitsbehälters 1 einsetzen und die im Arbeitsbehälter 1 befindlichen Nahrungsmittel mittels des Arbeitswerkzeugs 56 des Stabmixers 57 zerkleinern, ohne daß das Arbeitswerkzeug 56 Kontakt mit dem Lagerzapfen 11 bekommt. Durch die Erfindung können also mittels verschiedener Werkzeuge verschiedene Nahrungsmittel im Arbeitsbehälter 1 auf verschiedene Weise bearbeitet werden. Derartige zubereitete Nahrungsmittel sind beispielsweise geschlagene Sahne, pürierte Kartoffeln, Erdbeeren etc. oder klein zerhacktes Petersilie, Dill, Schnittlauch etc.

## Patentansprüche

1. Arbeitsbehälter (1) zum Aufnehmen und Bearbeiten von Nahrungsmitteln, mit einem den Aufnahmeraum (32) begrenzenden Behälterboden (3), der aus einem äußeren Abschnitt (19) und einem zentralen Endabschnitt (21) besteht, an dem in einer Bohrung (13) ein Lagerzapfen (11) befestigt ist, auf den ein die Nahrungsmittel bearbeitendes Arbeitswerkzeugs (34) aufsetzbar ist,
**dadurch gekennzeichnet,**
**daß** zur Versenkung des Lagerzapfens (11 ) im Behälterboden (3) des Arbeitsbehälters (1) der äußere Abschnitt (19) über eine ringförmige Vertiefung (20) mit dem zentralen Endabschnitt (21) verbunden ist.

2. Kombination eines Arbeitsbehälters nach Anspruch 1 und eines Handmixers, wobei bei von dem Lagerzapfen (11) entferntem Arbeitswerkzeug (34) anschließend ein an dem Handmixer ausgebildetes Arbeitswerkzeug (56), vorzugsweise Stabmixer, in den Arbeitsbehälter (1) einsetzbar ist,
**dadurch gekennzeichnet**
**daß** die radiale Breite (b) der Vertiefung (20) und die Länge des Lagerzapfens (11) nur so groß bemessen sind, daß das Arbeitswerkzeug (56) des Handmixers keinen nennenswerten Kontakt mit dem Lagerzapfen (11 ) erhalten kann, der zu Beschädigungen dieser Teile (56, 11) führt.

3. Arbeitsbehälter nach Anspruch 1,
**dadurch gekennzeichnet,**
**daß** in der Vertiefung (20) eine Sacklochbohrung (13) ausgebildet ist, in der der Lagerzapfen (11 ) drehfest und unlösbar befestigt ist.

4. Arbeitsbehälter nach Anspruch 1,
**dadurch gekennzeichnet,**
**daß** in der Vertiefung (20) eine Sacklochbohrung (13) als Buchsenaufnahme ausgebildet ist und daß in der Sacklochbohrung (13) eine Lagerzapfenbuchse (12) fest eingesetzt ist, in der ihrerseits der Lagerzapfen (11 ) drehfest und unlösbar befestigt ist.

5. Arbeitsbehälter nach Anspruch 3,
**dadurch gekennzeichnet,**
**daß** das freie Ende (22) des topfförmigen Endabschnittes (21) der Sacklochbohrung (13) nicht den Rand (23) des Behälterfußes (5) nach außen überschreitet.

## Claims

1. A working container (1) for receiving and processing foodstuffs, having a container bottom (3) that delimits the receiving area (32) and comprises an outer section (19) and a central end section (21), on which a bearing journal (11) onto which the working tool (34) for processing foodstuffs can be placed is secured in a hole (13),
**characterised in that**
the outer section (19) is connected to the central end section (21) via an annular recess (20) in order to accommodate the bearing journal (11) in the container bottom (3) of the working container (1) .

2. Combination of a working container as claimed in claim 1 and a hand-held mixer, wherein a working tool (56) conformed on a hand-held mixer, preferably a stick blender, can be inserted into the working container (1) when working tool (34) has been removed from the bearing journal (11),
**characterised in that**
the radial width (b) of the recess (20) and the length of the bearing journal (11) are calculated to ensure that the working tool (56) of the hand-held mixer cannot come into significant contact with the bearing journal (11), which would cause damage to both parts (56, 11).

3. The working container according to claim 1,
**characterised in that**
a blind hole (13) in which the bearing journal (11) is secured non-detachably and non-rotatably is conformed in recess (20).

4. The working container according to claim 1,
**characterised in that**
a blind hole (13) is conformed in recess (20) as a seating socket and that a bearing journal seating (12) is inserted securely in blind hole (13), to which bearing journal seating in turn bearing journal (11) is secured non-detachably and non-rotatably.

5. The working container according to claim 3,
**characterised in that**
the free end (22) of the U-shaped end section (21) of blind hole (13) does not protrude beyond the border (23) of the container base (5).

## Revendications

1. Récipient de préparation (1) pour contenir et préparer des aliments, avec un fond de récipient (3) délimitant l'espace de logement (32) et qui se compose d'un tronçon extérieur (19) et d'un tronçon d'extrémité (21) central, sur lequel fond un bout d'arbre (11) est fixé dans une forure (13) avec un outil de travail (34) pouvant être placé dessus pour la préparation des aliments, **caractérisé en ce que** pour noyer le bout d'arbre (11) dans le fond de récipient (3) du récipient de préparation (1), le tronçon extérieur (19) est relié via un renfoncement (20) annulaire au tronçon d'extrémité (21) central.

2. Combinaison d'un récipient de préparation selon la revendication 1 et d'un mixeur à mains, où il est ensuite possible, l'outil de travail (34) étant retiré du bout d'arbre (11), de placer dans le récipient de préparation (1) un outil de travail (56) développé sur le mixeur à mains, de préférence un mixeur plongeant, **caractérisée en ce que** la largeur radiale (b) du renfoncement (20) et la longueur du bout d'arbre (11) sont seulement dimensionnés d'une grandeur telle que l'outil de travail (56) du mixeur à mains ne peut avoir de contact significatif avec le bout d'arbre (11) pouvant entraîner un endommagement de ces pièces (56, 11).

3. Récipient de préparation selon la revendication 1, **caractérisé en ce qu'**une forure de trou borgne (13) est formée dans le renfoncement (20), à l'intérieur de laquelle le bout d'arbre (11) est fixé en solidarité de rotation et de manière non détachable.

4. Récipient de préparation selon la revendication 1, **caractérisé en ce que** dans le renfoncement (20) une forure de trou borgne (13) est développée en tant que logement de coussinet, et **en ce que** dans la forure de trou borgne (13), un coussinet de bout d'arbre (12) est placé de manière fixe, à l'intérieur duquel le bout d'arbre (11) est à son tour fixé en solidarité de rotation et de manière non détachable.

5. Récipient de travail selon la revendication 3, **caractérisé en ce que** l'extrémité libre (22) du tronçon d'extrémité (21) en forme de pot de la forure de trou borgne (13) ne dépasse pas le bord (23) du socle du récipient (5) vers l'extérieur.
